# EUROPEAN PATENT APPLICATION

(11) **EP 4 160 344 A1**
(43) Date of publication of application: **05.04.2023**
(21) Application number: 22191938.4
(22) Date of filing: 24.08.2022
(51) Int. Cl.: G05B 23/02

(54) **MONITORING APPARATUS, MONITORING METHOD, AND MONITORING PROGRAM**

(30) Priority: 30.09.2021 JP 2021160588
(71) Applicant: Yokogawa Electric Corporation, Musashino-shi, Tokyo 180-8750 (JP)
(72) Inventor: FUKUI, Takahisa, Tokyo, 180-8750 (JP)
(74) Representative: Zimmermann, Tankred Klaus

(57) **Abstract**

(Solution) Provided is a monitoring apparatus comprising: an association acquisition unit configured to acquire, for each of a plurality of pieces of equipment, an association with at least one sensor monitoring a state of the each of the plurality of pieces of equipment; a calculation unit configured to calculate, based on at least one measurement value from the at least one sensor associated with each piece of equipment of the plurality of pieces of equipment, a state value of each piece of equipment; a ranking unit configured to rank the plurality of pieces of equipment according to a change width or a change rate in the state value; and a display processing unit configured to perform a processing to display an information screen corresponding to the ranking of the plurality of pieces of equipment. (Selected figure) Fig. 2

## Description

### BACKGROUND

### 1. TECHNICAL FIELD

The present invention relates to a monitoring apparatus, a monitoring method, and a monitoring program.

### 2. RELATED ART

A conventionally used monitoring system allows an operational status of a plant or the like, etc. to be monitored by providing sensors in various pieces of equipment such as plants and displaying a measurement values from the sensors on a monitoring screen. With development of Industrial Internet of Things (IIoT), equipment monitoring by many sensors is becoming common in recent years. As such, the monitoring system displays, on the monitoring screen, many graphs showing transitions of measurement values from the many sensors (see, for example, Non-Patent Documents 1 and 2).

### Prior Art Document

### Non-Patent Document

Non-Patent Document 1: Seiki Odawara 'An Integrated Solution Offered by Sushi Sensor and GRANDSIGHT' Yokogawa Technical Report, Vol. 61 No. 1 (2018): 21-24
Non-Patent Document 2: Akirou Kitajima ‴Sushi Sensor" for Industrial IoT Solution Realizes Sense-making' Yokogawa Technical Report, Vol. 62 No. 2 (2019): 61-68

### SUMMARY

A first aspect of the present invention provides a monitoring apparatus. The monitoring apparatus may include an association acquisition unit configured to acquire, for each of a plurality of pieces of equipment, an association with at least one sensor monitoring a state of the each of the plurality of pieces of equipment. The monitoring apparatus may include a calculation unit configured to calculate, based on at least one measurement value from the at least one sensor associated with each piece of equipment of the plurality of pieces of equipment, a state value of each piece of equipment. The monitoring apparatus may include a ranking unit configured to rank the plurality of pieces of equipment according to a change width or a change rate in the state value. The monitoring apparatus may include a display processing unit configured to perform a processing to display an information screen corresponding to the ranking of the plurality of pieces of equipment.

The monitoring apparatus may include an association storage unit configured to store, for each of the plurality of pieces of equipment, the association with the at least one sensor monitoring the state of the each of the plurality of pieces of equipment.

The monitoring apparatus may include a learning processing unit configured to perform a processing to generate, by learning, a model calculating, from the at least one measurement value of the at least one sensor associated with each piece of equipment, the state value of the each piece of equipment. The calculation unit may calculate, for each piece of equipment, the state value from the at least one measurement value by using the model.

The learning processing unit may perform, for at least one piece of equipment, the processing to generate the model by learning through statistical learning using the at least one measurement value.

The display processing unit may perform, in association with each piece of equipment of the plurality of ranked pieces of equipment, a processing to display a learning button for instructing to generate the model. The learning processing unit may perform, in response to the learning button being pressed, the processing to generate the model by learning.

The monitoring apparatus may include a learning period selection unit configured to select, for the at least one piece of equipment of the plurality of pieces of equipment, a period of a predetermined length or longer during which a variation range of the at least one measurement value from the at least one sensor is equal to or less than a threshold, as a candidate learning period used to learn the model.

The display processing unit may perform a processing to display a chart indicating rank order transitions of the plurality of pieces of equipment. The display processing unit may perform a processing to highlight, in the chart, a rank order shift of a piece of equipment whose state value exhibits a change width or a change rate equal to or greater than a threshold, among the plurality of pieces of equipment.

The monitoring apparatus may include a selection unit configured to select at least one piece of equipment whose state value has changed by an amount equal to or greater than a predetermined change width or change rate during a predetermined time length period, among the plurality of pieces of equipment. The display processing unit may perform the processing to display the information screen for the at least one piece of equipment that has been selected.

The monitoring apparatus may include a selection condition input unit configured to input designation of at least one of the predetermined time length or the predetermined change width or change rate.

The display processing unit may perform, in association with each piece of equipment displayed on the information screen, a processing to display a graph display button for instructing display of a trend graph indicating a change in the at least one measurement value from the at least one sensor associated with the each piece of equipment. The display processing unit may perform, in response to the graph display button being pressed, a processing to display the trend graph.

A second aspect of the present invention provides a monitoring method. The monitoring method may include acquiring, by a monitoring apparatus, for each of a plurality of pieces of equipment, an association with at least one sensor monitoring a state of the each of the plurality of pieces of equipment. The monitoring method may include calculating, by the monitoring apparatus, based on at least one measurement value from the at least one sensor associated with each piece of equipment of the plurality of pieces of equipment, a state value of each piece of equipment. The monitoring method may include ranking, by the monitoring apparatus, the plurality of pieces of equipment according to a change width or a change rate in the state value. The monitoring method may include performing, by the monitoring apparatus, a processing to display an information screen corresponding to the ranking of the plurality of pieces of equipment.

A third aspect of the present invention provides a monitoring program executed by a computer. The monitoring program may cause the computer to function as an association acquisition unit configured to acquire, for each of a plurality of pieces of equipment, an association with at least one sensor monitoring a state of the each of the plurality of pieces of equipment. The monitoring program may cause the computer to function as a calculation unit configured to calculate, based on at least one measurement value from the at least one sensor associated with each piece of equipment of the plurality of pieces of equipment, a state value of each piece of equipment. The monitoring program may cause the computer to function as a ranking unit configured to rank the plurality of pieces of equipment according to a change width or a change rate in the state value. The monitoring program may cause the computer to function as a display processing unit configured to perform a processing to display an information screen corresponding to the ranking of the plurality of pieces of equipment.

The summary clause does not necessarily describe all necessary features of the embodiments of the present invention. The present invention may also be a sub-combination of the features described above.

### BRIEF DESCRIPTION OF THE DRAWINGS

Fig. 1 shows a configuration of a monitoring system 10 according to an embodiment of the present invention together with pieces of equipment 100a to 100c.
Fig. 2 shows a configuration of a monitoring apparatus 140 according to an embodiment of the present invention.
Fig. 3 shows an operational flow of the monitoring apparatus 140 according to an embodiment of the present invention.
Fig. 4 shows an example of historical data recorded in a recording unit 205 according to an embodiment of the present invention.
Fig. 5 shows an example of a ranking screen 500 outputted by the monitoring apparatus 140 according to an embodiment of the present invention.
Fig. 6 shows an example of a selection condition designation screen outputted by the monitoring apparatus 140 according to an embodiment of the present invention.
Fig. 7 shows an example of a trend graph outputted by the monitoring apparatus 140 according to an embodiment of the present invention.
Fig. 8 shows an example of a learning designation screen outputted by the monitoring apparatus 140 according to an embodiment of the present invention.
Fig. 9 shows an example of a computer 2200 in which a plurality of aspects of the present invention may be entirely or partially embodied.

### DESCRIPTION OF EXEMPLARY EMBODIMENTS

Hereinafter, the present invention will be described through embodiments of the invention, but the following embodiments do not limit the claimed invention. Moreover, not all combinations of features described in the embodiments are necessary to solutions of the invention.

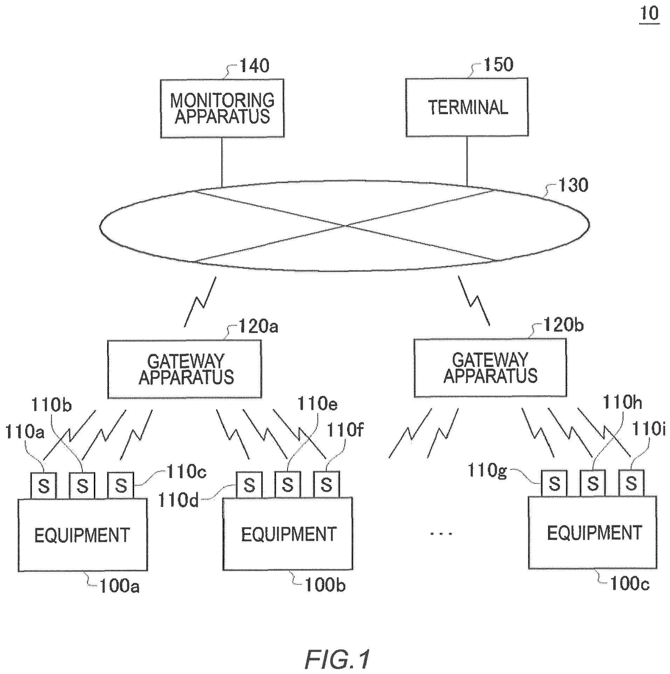

Fig. 1 shows a configuration of a monitoring system 10 according to this embodiment together with pieces of equipment 100a to 100c. The one or more pieces of equipment 100a to 100c (hereinafter, also referred to as "piece(s) of equipment 100") are provided in a plant or the like. Such a plant may be, for example, an industrial plant such as a chemical or metal plant; a plant for managing and controlling a well site such as a gas field and an oil field and its surroundings; a plant for managing and controlling electrical power generation such as hydraulic, thermal, and nuclear power generation; a plant for managing and controlling energy harvesting such as solar photovoltaic and wind power generation; a plant for managing and controlling water supply and sewerage, a dam, or the like, etc. Moreover, the pieces of equipment 100 may be provided in a building, various industrial plants, means of transportation, or the like. Such pieces of equipment 100 may have one or more process apparatuses, one or more electrical power generation apparatuses, and one or more other apparatuses.

Each piece of equipment 100 may have one or more field instruments. The field instruments may be, for example, sensor instrument such as a pressure meter, a flowmeter, and a temperature sensor; a valve instrument such as a flow control valve and an on-off valve; an actuator instrument such as a fan and a motor; an imaging instrument such as a camera or a video for photographing a situation of a plant or the like and an object such as a piece of equipment; an acoustic instrument such as a microphone or a speaker for collecting an abnormal noise from a plant, a piece of equipment, or the like, etc. or emitting a warning sound or the like; a position detection instrument for outputting positional information of an apparatus provided in the pieces of equipment 100; or another instrument.

The one or more pieces of equipment 100 are provided with a plurality of sensors 110a to 110i (hereinafter, also referred to as "sensor(s) 110") that function as a sensor instrument, an imaging instrument, an acoustic instrument, or the like monitoring these states. At least one sensor 110 may be provided to each piece of equipment 100. Each sensor 110 may be a sensor instrument incorporated in the piece of equipment 100, or may be retrofitted to the piece of equipment 100 or installed near the piece of equipment 100. Each sensor 110 may measure a measurement value (such as acceleration, velocity, temperature, pressure, flow rate, or vibration) for the piece of equipment 100. Two or more sensors 110 may be incorporated in a sensor apparatus for measuring two or more types of measurement values for the piece of equipment 100. In the example of this figure, the sensors 110a to 110c are provided to monitor a state of the piece of equipment 100a, the sensors 110d to 110f are provided to monitor a state of the piece of equipment 100b, and the sensors 110g to 110i are provided to monitor a state of the piece of equipment 100c.

The monitoring system 10 is provided with one or more gateway apparatuses 120a and 120b, a monitoring apparatus 140, and a terminal 150. The one or more gateway apparatuses 120a and 120b (hereinafter, also referred to as "gateway apparatus(es) 120") are communicably connected to the plurality of sensors 110, and receive a measurement value from each sensor 110. In this embodiment, each gateway apparatus 120 wirelessly communicates with at least one sensor 110 by using Low Power Wide Area (LPWA) such as LoRa as an example. Instead, each gateway apparatus 120 may communicate with the at least one sensor 110 by wire, or may communicate with the at least one sensor 110 by using a communication protocol defined by HART (registered trademark), BRAIN, FOUNDATION Fieldbus (registered trademark), ISA100.11a, or the like. Each gateway apparatus 120 may be connected to two or more sensors 110, and collect measurement values from these two or more sensors 110. In the example of this figure, the gateway apparatus 120a is connected to the sensors 110a to 110f, and the gateway apparatus 120b is connected to the sensors 110g to 110i.

Each gateway apparatus 120 is connected to the network 130, and transmits measurement values from the sensors 110 assigned to each gateway apparatus 120 among the plurality of sensors 110, to the monitoring apparatus 140 via the network 130, which is a wide area network such as the Internet or WAN. In the example of this figure, each gateway apparatus 120 is connected to the network 130 via a wireless network such as a mobile phone line. Instead, each gateway apparatus 120 may be connected to the network 130 via a wired network such as Ethernet (registered trademark).

The monitoring apparatus 140 is connected to the one or more gateway apparatuses 120 via the network 130, and monitors the one or more pieces of equipment 100 by using the measurement values from the plurality of sensors 110. The monitoring apparatus 140 may be realized by a computer such as a PC (personal computer), a tablet computer, a smartphone, a workstation, a server computer, or a general-purpose computer, or may be realized by a computer system with a plurality of computers connected thereto. Such a computer system is also a computer in a broad sense. The monitoring apparatus 140 may be a dedicated computer designed for monitoring a piece of equipment, or may be a dedicated hardware realized by a dedicated circuit.

In the example of this figure, the monitoring apparatus 140 is a cloud computing system, and provides an equipment monitoring environment through a service on a cloud computer to each of one or more customers who monitor a piece of equipment such as a plant. Instead, the monitoring apparatus 140 may be provided on the premises of a facility such as a specific plant, and be connected to each sensor 110 or each gateway apparatus 120 via a local area network to provide an on-premises equipment monitoring environment. Moreover, the gateway apparatus 120 connected to the at least one sensor 110 may also function as the monitoring apparatus 140.

The terminal 150 is connected to the monitoring apparatus 140 via the network 130, and displays a screen for equipment monitoring outputted by the monitoring apparatus 140. Moreover, the terminal 150 inputs an instruction from a monitoring person of a plant or the like provided with the one or more pieces of equipment 100, to transmit it to the monitoring apparatus 140. The terminal 150 may be arranged on the premises of a facility such as a plant, or may be arranged at a place away from a facility such as a plant. Note that the screen for equipment monitoring may be displayed on an indicator or the like provided in the monitoring apparatus 140, and the instruction from the monitoring person may be inputted by using this indicator or the like.

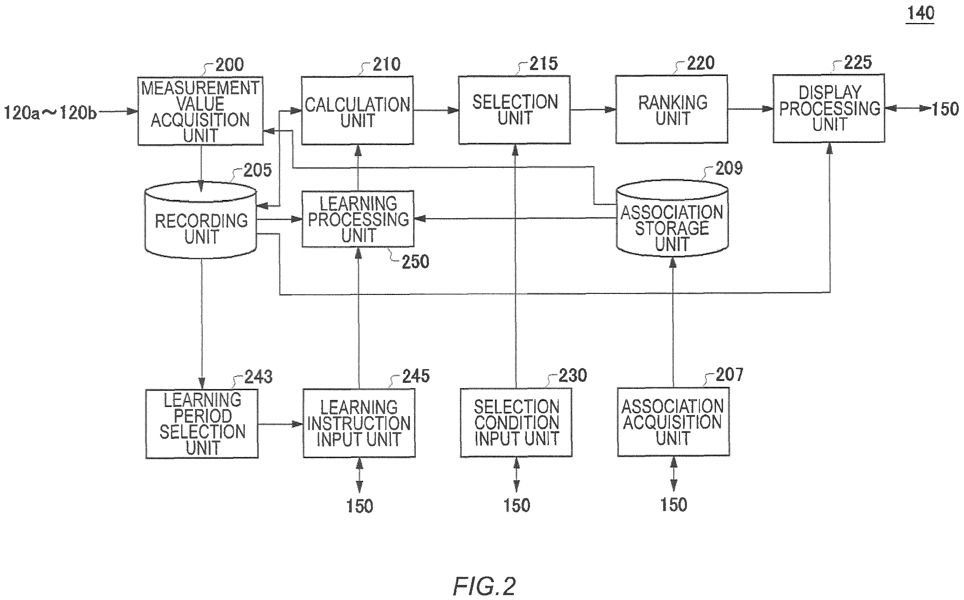

Fig. 2 shows a configuration of the monitoring apparatus 140 according to this embodiment. The monitoring apparatus 140 includes a measurement value acquisition unit 200, a recording unit 205, an association acquisition unit 207, an association storage unit 209, a calculation unit 210, a selection unit 215, a ranking unit 220, and a display processing unit 225. The measurement value acquisition unit 200 is connected to the one or more gateway apparatuses 120 via the network 130 and is configured to acquire the measurement values from the plurality of sensors 110. The measurement value acquisition unit 200 is configured to continuously acquire a latest measurement value from each sensor 110 at, for example, a predetermined cycle (every second, every minute, every hour, or the like). The measurement value acquisition unit 200 is configured to store each acquired measurement value in the recording unit 205. The recording unit 205 is connected to the measurement value acquisition unit 200. The recording unit 205 is, as an example, an external storage such as a hard disk apparatus, and is configured to sequentially store the measurement values acquired by the measurement value acquisition unit 200, in association with timing information such as a time or a date and time related to the measurement values, such as a measurement time of each measurement value, an acquisition time at the gateway apparatus 120, an acquisition time at the monitoring apparatus 140, or the like. The measurement value acquisition unit 200 is configured to refer to an association stored in the association storage unit 209 between the piece of equipment 100 and the sensor 110, and store, for each piece of equipment 100, a measurement value from the at least one sensor 110 associated with the piece of equipment 100, in the recording unit 205. As such, the recording unit 205 is configured to store historical data of the measurement values from the plurality of sensors 110.

The association acquisition unit 207 is configured to acquire, for each of a plurality of pieces of equipment 100, an association with at least one sensor 110 monitoring a state of that piece of equipment 100. The association storage unit 209 is connected to the association acquisition unit 207. The association storage unit 209 is configured to store the association acquired by the association acquisition unit 207.

The calculation unit 210 is connected to the recording unit 205. The calculation unit 210 is configured to calculate, based on at least one measurement value from the at least one sensor 110 monitoring a state of each piece of equipment 100, a state value of each piece of equipment 100. In this embodiment, the calculation unit 210 has, for each of the plurality of pieces of equipment 100, a model that calculates, from the measurement value of the at least one sensor 110 associated with each piece of equipment 100, a state value of that piece of equipment 100, and is configured to calculate, for each piece of equipment 100, a state value from the at least one measurement value by using the model. This model may calculate, based on measurement values from one or more sensors 110 for each piece of equipment 100, a diagnostic value indicating a result of diagnosing the piece of equipment 100 such as soundness or normality degree, or abnormality degree of that piece of equipment 100, as a state value of that piece of equipment 100. The calculation unit 210 may store, in the recording unit 205, a state value of a certain piece of equipment 100 calculated based on a measurement value collected at a certain time, in association with the measurement value collected at that time for that piece of equipment 100. Note that, in case where a time when the the measurement value is acquired is associated with the measurement value, the calculation unit 210 may store the state value calculated based on the measurement value in the recording unit 205 in association with the time when the measurement value is acquired.

The selection unit 215 is connected to the calculation unit 210. The selection unit 215 is configured to select at least one piece of equipment 100 for which a state value outputted from the calculation unit 210 has changed by an amount equal to or greater than a predetermined change width or change rate during a predetermined time length period, among the plurality of pieces of equipment 100. This time length is a judgement period length for judging a change in the state value, and this change width or change rate is a judgement threshold for judging whether to select the state value. For example, the selection unit 215 may be set to select a piece of equipment 100 whose state value has dropped by 0.3 or more in 5 days. The selection unit 215 is configured to judge, for each of state values of the plurality of pieces of equipment 100, whether there is a change by an amount equal to or greater than the predetermined change width or change rate between a latest state value and a past state value for a predetermined time length (for example, a state value for 5 days ago), and select the piece of equipment 100 with a state value judged to have exhibited such a change as a report target. In this embodiment, the selection unit 215 is configured to make a selection of the piece of equipment 100 based on whether the state value has changed by the amount equal to or greater than the predetermined change width. Instead, the selection unit 215 may make a selection of the piece of equipment 100 based on whether the state value has changed by the amount equal to or greater than the predetermined change rate. Note that the selection unit 215 may judge whether there is a change by the amount equal to or greater than the predetermined change width or change rate between the maximum value and the minimum value of the state value within the judgement period.

The ranking unit 220 is connected to the selection unit 215. The ranking unit 220 is configured to receive a state value of at least one piece of equipment 100 selected by the selection unit 215, and rank the at least one piece of equipment 100 according to a change width or a change rate in the state value. For example, the ranking unit 220 is configured to rearrange the selected at least one piece of equipment 100 in descending order of a drop width of the state value. When the state value for the piece of equipment 100 indicates the soundness of the piece of equipment 100, it indicates that the larger the drop width of the state value is, the more rapidly the soundness of the piece of equipment 100 has deteriorated. Therefore, the ranking unit 220 is configured to allow more preferential presentation of a piece of equipment 100 whose soundness has rapidly deteriorated, by rearranging the selected at least one piece of equipment 100 in descending order of the drop width of the state value. Note that, according to a nature of the state value, the instruction of the monitoring person, or the like, the selection unit 215 may rank the at least one piece of equipment 100 according to a rise width or a rise rate of the state value, or may rank it according to a width or a rate of magnitude of the change (an absolute value of a difference between the latest state value and the past state value). The ranking unit 220 may rank a piece of equipment 100 not selected by the selection unit 215, as being out of the ranking.

The ranking unit 220 may rank, for each of a plurality of time points, the at least one piece of equipment 100 selected by the selection unit 215, according to the change (change width or change rate) in the state value at that time point. This allows the ranking unit 220 to specify rank order transitions of the plurality of pieces of equipment 100.

The display processing unit 225 is connected to the ranking unit 220 and the recording unit 205. The display processing unit 225 is configured to perform a processing to display an information screen corresponding to the ranking of the plurality of pieces of equipment 100 by the ranking unit 220. Performing a processing to display a screen includes not only actually displaying the screen on a display apparatus but also generating display data for displaying the screen on a remote display apparatus such as the terminal 150 or the like. In this embodiment, the display processing unit 225 is configured to generate display data (for example, a screen layout or the like that configures an information screen) for displaying the ranking of the plurality of pieces of equipment 100 on the display apparatus of the terminal 150 arranged outside the monitoring apparatus 140, for transmission to the terminal 150. When the monitoring apparatus 140 includes a display apparatus, the display processing unit 225 may cause that display apparatus to display an information screen such as a chart corresponding to the ranking of the plurality of pieces of equipment 100. Moreover, in response to an instruction being inputted from the terminal 150 that a trend graph should be displayed, the display processing unit 225 reads, from the recording unit 205, a state value designated by this instruction and historical data of a measurement value related to this state value, to perform a processing to graph and display them.

According to the monitoring apparatus 140 shown above, the plurality of pieces of equipment 100 can be selected according to the change width or the change rate in the state value, and the selected at least one piece of equipment 100 can be ranked according to the change width or the change rate in the state value for display. This allows the monitoring apparatus 140 to more preferentially present a piece of equipment 100 exhibiting a change in the state value with a higher level of importance. As a result, compared to when displaying a graph of many measurement values for many pieces of equipment 100, the monitoring apparatus 140 can more promptly cope with abnormality or the like of a specific piece of equipment 100 to increase an operation rate of a plant or the like, and reduce generation of the abnormality.

Moreover, the monitoring apparatus 140 can calculate, by the calculation unit 210, the state value indicating the state of each piece of equipment 100 based on measurement values from the one or two or more sensors 110 associated with each piece of equipment 100. Therefore, the monitoring apparatus 140 can allow, by preferentially presenting the change in the state value with a higher level of importance, easier specification of a piece of equipment 100 in which the abnormality is possibly generated.

The monitoring apparatus 140 may include a selection condition input unit 230. The selection condition input unit 230 is configured to input, from the terminal 150, designation of the judgement period length (the predetermined time length) and of the judgement threshold (at least one of the predetermined change width or change rate). The selection condition input unit 230 sets, in the selection unit 215, the time length, the change width, or the like that has been designated, as the time length, the change width, or the like used by the selection unit 215 to select the piece of equipment 100.

Moreover, the monitoring apparatus 140 may include a learning instruction input unit 245 and a learning processing unit 250. The learning instruction input unit 245 is configured to input, for the at least one piece of equipment 100 of the plurality of pieces of equipment 100, an instruction to learn the model used by the calculation unit 210 to calculate the state value of the piece of equipment 100. The learning processing unit 250 is connected to the recording unit 205, the association storage unit 209, and the learning instruction input unit 245. The learning processing unit 250 is configured to perform, in response to the instruction to learn the model being inputted from the terminal 150, a processing to generate, by learning, the model based on the historical data of the at least one measurement value stored in the recording unit 205 in association with the piece of equipment 100 to be learned. Then, the learning processing unit 250 provides the learned model to the calculation unit 210.

The monitoring apparatus 140 may include a learning period selection unit 243. The learning period selection unit 243 is configured to select, for each of the at least one piece of equipment 100 of the plurality of pieces of equipment 100, a candidate learning period used to learn the model in time-series data of the at least one measurement value from the at least one sensor 110 associated with that piece of equipment 100. The learning period selection unit 243 is configured to select a period of a predetermined length or longer during which a variation range of each measurement value from each sensor 110 associated with the piece of equipment 100 is equal to or less than a threshold (learning period judgement threshold), as the candidate learning period used to learn the model. The learning period selection unit 243 is configured to provide the selected candidate learning period to the learning instruction input unit 245.

Note that the learning instruction input unit 245, the learning processing unit 250, and the learning period selection unit 243 may be provided in an apparatus outside the monitoring apparatus 140. In this case, the calculation unit 210 in the monitoring apparatus 140 is configured to receive the learned model and calculate the state value of each piece of equipment 100 by using the received model.

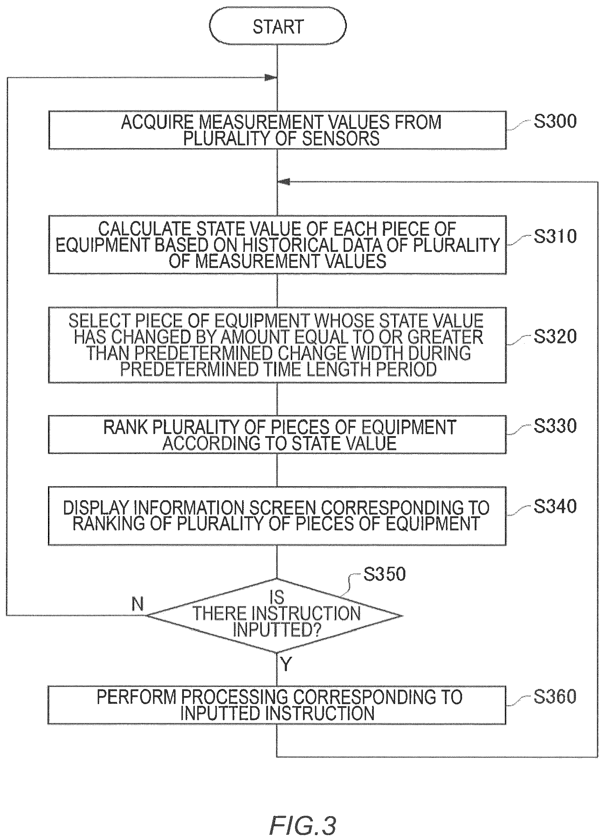

Fig. 3 shows an operational flow of the monitoring apparatus 140 according to this embodiment. At S300 (step 300), the measurement value acquisition unit 200 acquires latest measurement values from the plurality of sensors 110, for storage in the recording unit 205.

At S310, the calculation unit 210 calculates, for each of the plurality of pieces of equipment 100, a state value of that piece of equipment 100 by using a model associated with that piece of equipment 100. In this embodiment, as an example, the model associated with the piece of equipment 100 uses, as an input, one or two or more measurement values at a certain time point (for example, a current time point or a latest time point) from each sensor 110 assigned to the piece of equipment 100, and defines a calculation method for calculating a diagnostic value at a certain time point (for example, the current time point or the latest time point) of the piece of equipment 100 from these measurement values.

At S320, the selection unit 215 selects at least one piece of equipment 100 for which a state value outputted from the calculation unit 210 has changed by an amount equal to or greater than a predetermined change width or change rate during a predetermined time length period, among the plurality of pieces of equipment 100. This allows the selection unit 215 to narrow down a display target to some pieces of equipment 100 satisfying a selection condition, instead of setting many pieces of equipment 100 provided in a facility such as a plant, as a target to be displayed in an enumerated state.

At S330, the ranking unit 220 receives a state value of the at least one piece of equipment 100 selected by the selection unit 215. The ranking unit 220 ranks the at least one piece of equipment 100 according to a change width or a change rate in the state value.

At S340, the display processing unit 225 performs a processing to display an information screen corresponding to the at least one piece of equipment 100 ranked by the ranking unit 220. The display processing unit 225 generates display data for displaying the information screen corresponding to the ranked piece of equipment 100, and transmits them to the terminal 150.

At S350, the display processing unit 225, the selection condition input unit 230, and the learning instruction input unit 245 check whether there is an instruction inputted from the terminal 150. If there is no instruction inputted to any of the display processing unit 225, the selection condition input unit 230, and the learning instruction input unit 245, the monitoring apparatus 140 advances its processing to S300, to repeat the processing at and after S300 for measurement values at a next time point from the plurality of sensors 110.

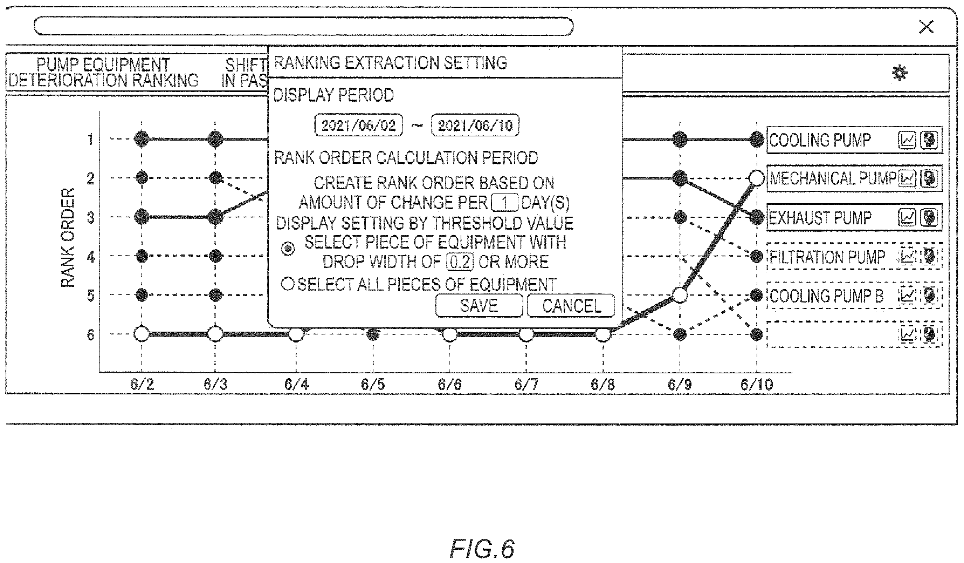

If there is an instruction inputted to any of the display processing unit 225, the selection condition input unit 230, and the learning instruction input unit 245, the input unit or the like to which the instruction has been inputted performs a processing corresponding to the inputted instruction at S360. If there is an instruction inputted for the selection condition, the monitoring apparatus 140 may perform the processings at S310 to S350 by using the selection condition or the like updated by the inputted instruction. A specific processing corresponding to the inputted instruction will be described later in correlation with Figs. 6 to 8.

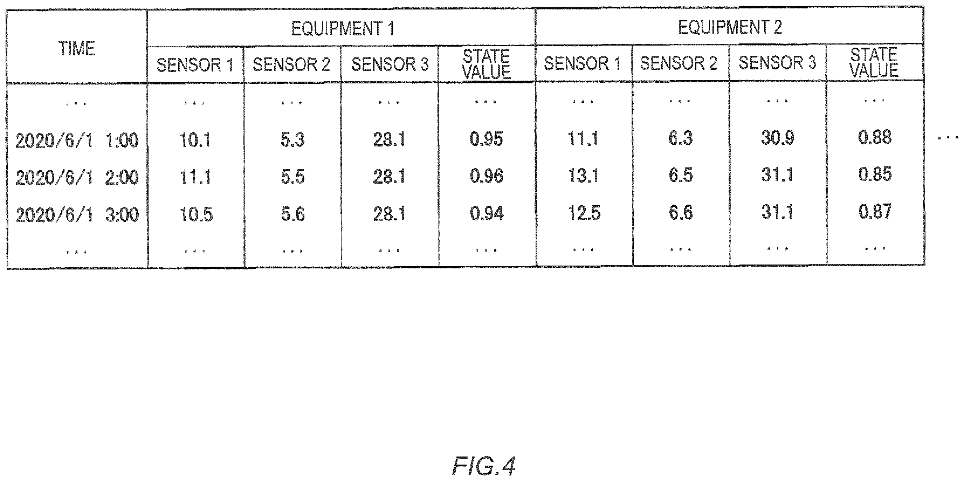

Fig. 4 shows an example of historical data recorded in the recording unit 205 according to this embodiment. The recording unit 205 stores historical data including: a plurality of measurement values acquired from the plurality of sensors 110 at a plurality of times such as for each predetermined cycle; and a plurality of state values calculated for the plurality of pieces of equipment 100.

The historical data shown in this figure has: a time field for recording a time; and a plurality of equipment fields for recording a measurement value and a state value for each of the plurality of pieces of equipment 100. Each equipment field includes: at least one measurement value field for recording a measurement value from at least one sensor 110 assigned to a corresponding piece of equipment 100; and a state value field for recording a state value of the corresponding piece of equipment 100. The time recorded in the time field may be a time correlated with the measurement value or the state value.

In this figure, the historical data records: measurement values 10.1, 5.3, and 28.1 from a sensor 1 (for example, sensor 110a), a sensor 2 (for example, sensor 110b), and a sensor 3 (for example, sensor 110c) that were acquired at 1:00 on June 1, 2020 for a piece of equipment 1 (for example, piece of equipment 100a); and a state value 0.95 at 1:00 on June 1, 2020 that was calculated by using these measurement values.

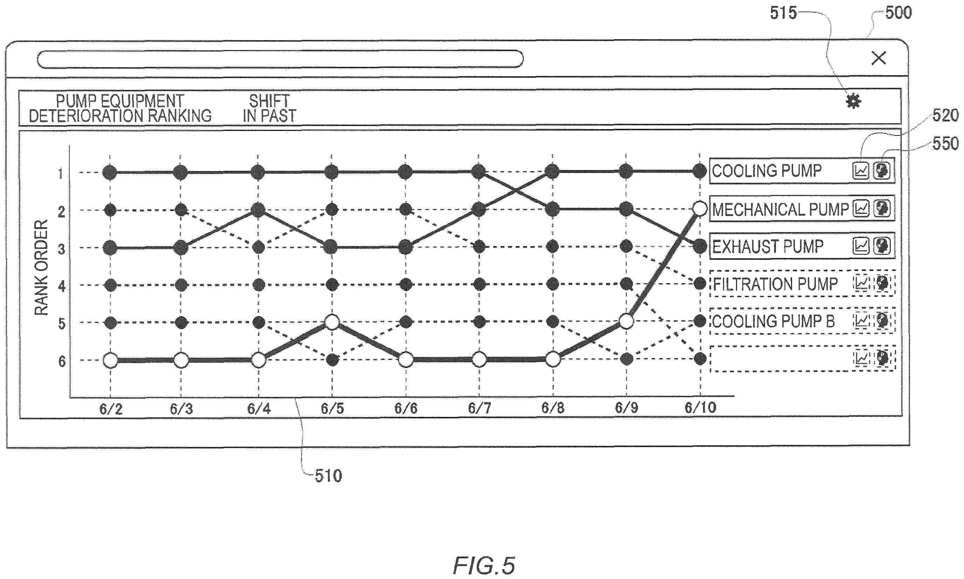

Fig. 5 shows an example of a ranking screen 500 outputted by the monitoring apparatus 140 according to this embodiment. The display processing unit 225 is configured to perform a display processing for displaying the ranking screen 500, which is an example of the information screen corresponding to the ranking of the plurality of pieces of equipment 100 by the ranking unit 220.

The ranking screen 500 includes a chart 510 and a setting button 515. The chart 510 displays rank order transitions of the plurality of pieces of equipment 100 or the at least one piece of equipment 100 selected by the selection unit 215. In the chart 510, the horizontal axis indicates each time point in chronological order, and the vertical axis indicates rank orders. The chart 510 displays, for each piece of equipment 100, a rank order transition by connecting rank orders at the time points with a polygonal line.

In this embodiment, the state value is an indicator of soundness of the corresponding piece of equipment 100, and the chart 510 displays the pieces of equipment 100 in descending order of the drop width of the state value. In the example of this figure, "COOLING PUMP" ranks third in the drop width of the state value on June 2 to 3, ranks forth on June 4, ranks third on June 5 to 6, ranks second on June 7, and ranks first on June 8 to 10. "MECHANICAL PUMP" ranks sixth in the drop width of the state value on June 2 to 4, ranks fifth on June 5, ranks sixth on June 6 to 8, ranks fifth on June 9, and ranks second on June 10. As a result, the monitoring apparatus 140 can cause the terminal 150 to preferentially display the pieces of equipment 100 in descending order of a drop in the soundness, and can more promptly take action, for example, conduct inspection for a piece of equipment 100 with a larger drop in the soundness. Moreover, the monitoring apparatus 140 can allow, by displaying the rank order transition, grasp of a fact that the state value of each piece of equipment has deteriorated day by day, for example.

Note that the display processing unit 225 may change, according to magnitude of the change width or the change rate in the state value of the piece of equipment 100, a display format for a rank order shift of that piece of equipment 100. For example, the display processing unit 225 may perform a processing to highlight, in the chart 510, a rank order shift of a piece of equipment 100 whose state value exhibits a change width or a change rate equal to or greater than a threshold, among the plurality of pieces of equipment 100. A threshold used to determine whether to change the display format may be a value larger than the judgement threshold that is compared with the state value in order to judge the piece of equipment 100 selected by the selection unit 215. Highlighting may be, for example, thickening a polygonal line indicating a rank order shift compared to a normal case (for example, the polygonal line for the mechanical pump in Fig. 5), changing a color of the polygonal line to a prominent color such as red color, thickening a frame for display of a name or the like of the piece of equipment 100 corresponding to each polygonal line as indicated on the right side of the chart 510, changing a color of the frame to a prominent color, enlarging a letter, boldfacing a letter, inserting an auxiliary line such as an underline, or changing another display format, etc. Moreover, the display processing unit 225 may perform a processing to highlight rank order shifts of one or two or more pieces of equipment 100 selected by a user of the monitoring apparatus 140, among the plurality of pieces of equipment 100.

The setting button 515 is a button for instructing to display a selection condition designation screen for designating at least one of the judgement period length or the judgement threshold of the state value used by the selection unit 215 to select the piece of equipment 100. The selection condition designation screen will be described later by using Fig. 6.

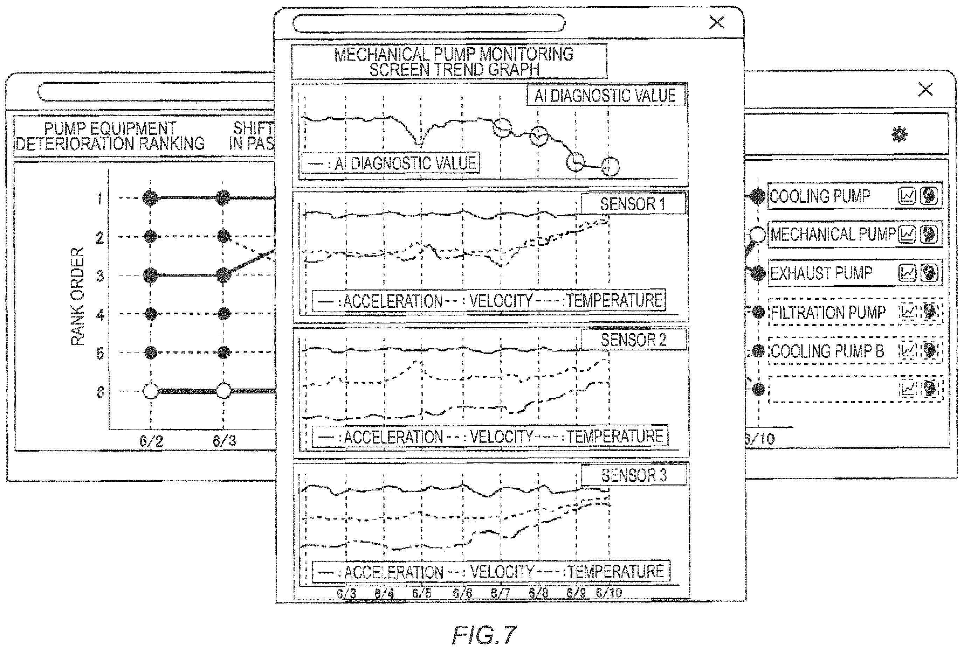

Moreover, the display processing unit 225 may perform, in association with each piece of equipment 100 of the plurality of ranked pieces of equipment in the ranking screen 500, a processing to display a graph display button 520. The graph display button 520 is a button for instructing the display of the trend graph showing a change in the at least one measurement value from the at least one sensor 110 associated with each piece of equipment 100. The display of the trend graph will be described later by using Fig. 7.

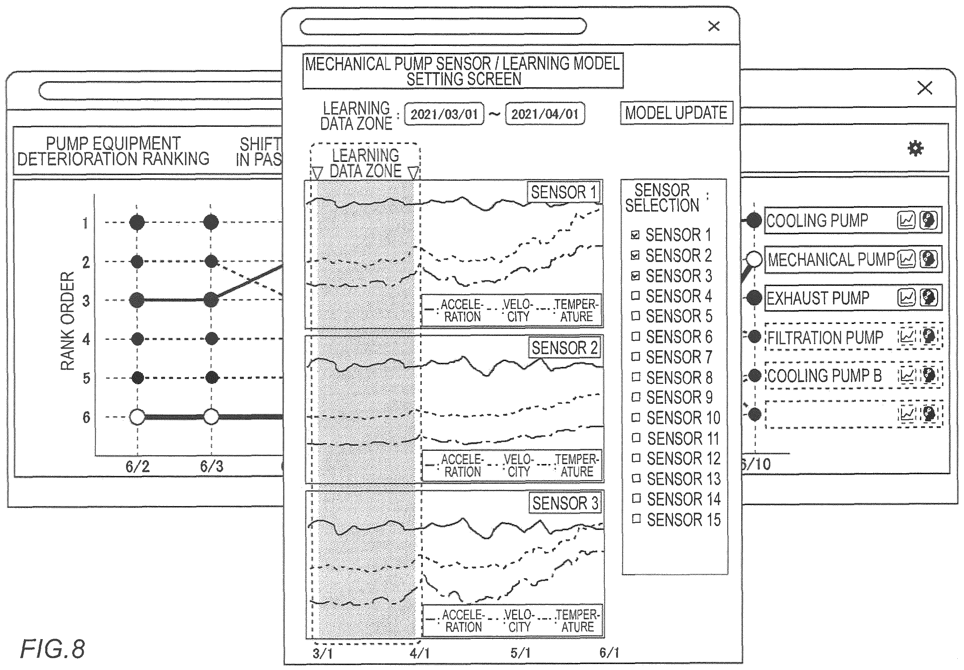

The display processing unit 225 may perform, in association with each piece of equipment 100 of the plurality of ranked pieces of equipment, a processing to display a learning button 550. The learning button 550 is a button for instructing to generate, by learning, the model calculating the state value of the corresponding piece of equipment 100. In this embodiment, the learning button 550 is for instructing to display a learning designation screen for making designation regarding the learning of the model calculating the state value of each piece of equipment 100. The learning designation screen will be described later in relation to Fig. 8.

Note that the display processing unit 225 may display the ranking screen 500 as one of display components such as a dashboard, a window, or a sub-window included in a monitoring screen. As a result, the display processing unit 225 can, as an example, cause the monitoring screen to simultaneously display a plurality of ranking screens 500 having different parameters such as the time length or the change width used to select the piece of equipment 100.

Fig. 6 shows an example of the selection condition designation screen outputted by the monitoring apparatus 140 according to this embodiment. The display processing unit 225 is configured to perform, in response to the setting button 515 in the ranking screen 500 being pressed, a processing to display the selection condition designation screen of this figure. This selection condition designation screen is a screen for inputting the designation of the judgement period length (the predetermined time length) and of the judgement threshold (the predetermined change width or change rate) of the change in the state value used by the selection unit 215 to select the piece of equipment 100.

In the selection condition designation screen, a "DISPLAY PERIOD" field is used to accept a display period for which ranking transitions of the plurality of pieces of equipment 100 are displayed. The display processing unit 225 is configured to change, in response to the display period being accepted, the period displayed on the ranking screen 500 to the period inputted to the "DISPLAY PERIOD" field.

In the selection condition designation screen, a "RANK ORDER CALCULATION PERIOD" field is used to accept the judgement period length of the change in the state value, as an example, on a daily basis. Instead, in the the selection condition designation screen, another unit such as seconds, minutes, or hours may be used to accept the judgement period length. The display processing unit 225 may also use the length of the period inputted to the "RANK ORDER CALCULATION PERIOD" field as an interval between the time points displayed on the ranking screen 500.

Moreover, in the selection condition designation screen, a "DISPLAY SETTING BY THRESHOLD" field is used to accept the judgement threshold used during the judgement period. The blank of "SELECT A PIECE OF EQUIPMENT WITH DROP WIDTH OF (BLANK) OR MORE" in the "DISPLAY SETTING BY THRESHOLD" field accepts an input of the judgement threshold of the drop width of the state value. For example, as in this figure, when the "DISPLAY SETTING BY THRESHOLD" field is designated as "SELECT A PIECE OF EQUIPMENT WITH DROP WIDTH OF 0.2 OR MORE", the selection unit 215 is configured to select a piece of equipment 100 whose state value has dropped by 0.2 or more during the judgement period (for example, 1 day) designated in a "JUDGEMENT PERIOD" field. Note that "SELECT ALL THE PIECES OF EQUIPMENT" in the "DISPLAY SETTING BY THRESHOLD" field is for designating that all the pieces of equipment 100 should be displayed. When this item is selected, the selection unit 215 is configured to select all the pieces of equipment 100.

Moreover, the selection condition designation screen may have a save button for saving the above-described designation to set it in the selection unit 215 and a cancel button for cancelling the above-described designation. When inputting designation of the selection condition via the selection condition designation screen at S350 of Fig. 3, the selection condition input unit 230 sets the designated selection condition in the selection unit 215 at S360. This allows the selection unit 215 to select, in response to re-execution of S320, the state value by using the selection condition inputted via the selection condition designation screen. Note that the display processing unit 225 may display, as the selection condition designation screen, a screen for only designating either the judgement period length or the judgement threshold, and the selection condition input unit 230 may set the designated judgement period length or judgement threshold in the selection unit 215.

Fig. 7 shows an example of the trend graph outputted by the monitoring apparatus 140 according to this embodiment. The display processing unit 225 is configured to perform, in response to the graph display button 520 associated with a certain piece of equipment 100 in the ranking screen 500 being pressed, a processing to display a trend graph related to a state value of that piece of equipment 100. Specifically, the display processing unit 225 is configured to output, to a display screen, an axis, an axis title, an axis scale, or the like for each of a horizontal axis and a vertical axis of the trend graph. Moreover, the display processing unit 225 is configured to read, from the recording unit 205, a state value of a display target at each time within a display period of the trend graph, to plot it on the trend graph.

The trend graph shows a temporal change in the corresponding state value. In this figure, the horizontal axis indicates a time, and the vertical axis indicates a state value ("AI DIAGNOSTIC VALUE" in the figure). The display processing unit 225 may cause the terminal 150 to display additional information such as an auxiliary line or an annotation that allows the change width or the change rate in the state value to be visually confirmed, in addition to the graph itself of the temporal change in the state value. In the trend graph of this example, emphasis is made on points on the graph corresponding to the state values at start and end of the judgement period determined to satisfy the selection condition, by circling them.

Moreover, the display processing unit 225 may perform, in addition to a trend graph of a state value of a target piece of equipment 100, a processing to display a trend graph indicating changes in one or two or more measurement values from the one or two or more sensors 110 assigned to that piece of equipment 100. Specifically, the display processing unit 225 is configured to read, from the recording unit 205, a measurement value of the display target at each time within the display period of the trend graph, to plot it on the trend graph. The trend graph of this example shows, in addition to a shift in the state value of the piece of equipment 100, shifts in measurement values of a temperature and acceleration for that piece of equipment 100 during the same period. The display processing unit 225 may plot on a separate trend graph the measurement value from each sensor 110 assigned to the piece of equipment 100. When two or more sensors 110 are incorporated in a sensor apparatus, the display processing unit 225 may plot, on the same trend graph, measurement values from the two or more sensors 110 incorporated in one sensor apparatus.

The display processing unit 225 shown above allows display of a trend graph of a measurement value and a state value of a designated piece of equipment 100, among the pieces of equipment 100 selected by the selection unit 215. As a result, the display processing unit 225 can allow more prompt display of significant changes in the measurement value and the state value selected by the selection unit 215, to eliminate abnormality of a plant or the like at an early stage.

Fig. 8 shows an example of the learning designation screen outputted by the monitoring apparatus 140 according to this embodiment. The display processing unit 225 is configured to perform, in response to the learning button 550 associated with a certain piece of equipment 100 in the ranking screen 500 being pressed, a processing to display the learning designation screen for making designation regarding learning of a model calculating a state value of that piece of equipment 100. Then, the learning processing unit 250 is configured to perform, in response to the learning button 550 being pressed, a processing to generate the model by learning after receiving the designation regarding the learning of the model.

The learning designation screen according to this embodiment is for inputting designation of one or more sensors 110 monitoring a state of the target piece of equipment 100. In the example of this figure, the learning designation screen displays a plurality of sensors 110 in a frame displayed as "SENSOR SELECTION", and allows designation of at least one sensor 110 to be associated with the piece of equipment 100 from among the plurality of sensors 110 by a checkbox. The association acquisition unit 207 is configured to acquire each sensor 110 whose checkbox has been checked by the user of the monitoring apparatus 140, as the sensor 110 to be associated with the target piece of equipment 100. Then, the association acquisition unit 207 is configured to store, in the association storage unit 209, an association between the target piece of equipment 100 and each sensor 110 whose checkbox has been checked. Note that the example of Fig. 8 shows a state where the user of the monitoring apparatus 140 has inputted a designation that the sensors 1 to 3 should be associated with the mechanical pump.

Moreover, the learning designation screen according to this embodiment is for inputting, from the user of the monitoring apparatus 140, designation of the period of the learning data used to learn the model calculating the state value of the target piece of equipment 100. In the example of this figure, the learning designation screen accepts designation of a start date and an end date of the period of the learning data by using a "LEARNING DATA ZONE" field. Instead, the learning designation screen may allow input of a plurality of periods of the learning data.

The learning period selection unit 243 may generate the candidate learning period to provide it to the learning instruction input unit 245, thereby causing the candidate learning period to be displayed as an initial value in the "LEARNING DATA ZONE" field of the learning designation screen. The learning period selection unit 243 may select, as the candidate learning period, a period of a predetermined length or longer during which a variation range of each measurement value for the target piece of equipment 100 is equal to or less than a predetermined threshold. The learning period selection unit 243 may set it as a condition that variation ranges of all the measurement values for the target piece of equipment 100 are equal to or less than a predetermined threshold, or may set it as a condition that a variation range of a measurement value equal to or greater than a predetermined number or ratio of all the measurement values for the target piece of equipment 100 is equal to or less than the predetermined threshold.

Moreover, the learning designation screen may further allow input of a hyperparameter (a parameter set prior to learning such as the number of layers in a neural network, the number of neurons in each layer, or the like) such as a setting value that does not change due to the learning in the model.

The learning designation screen may have a button for instructing to start the learning of the model by using the designation regarding the learning. In this figure, when "MODEL UPDATE" button is pressed, the learning instruction input unit 245 is configured to input the period of the learning data designated by the learning designation screen to provide it to the learning processing unit 250, and instructs the learning processing unit 250 to start the learning.

When the start of the learning is instructed, the learning processing unit 250 is configured to acquire, from the association storage unit 209, an association designated in the "SENSOR SELECTION" frame between the target piece of equipment 100 and the at least one sensor 110. The learning processing unit 250 is configured to acquire, from the recording unit 205, the measurement value from the at least one sensor 110 used to calculate the state value of the target piece of equipment 100 at each timing during the period designated by the learning instruction input unit 245, to use it as the learning data. When the target state value is, for example, the state value of the piece of equipment 100a, the learning processing unit 250 includes, in the learning data, measurement values from the sensors 110a to 110c for monitoring the state of the target piece of equipment 100a. In this embodiment, the learning processing unit 250 uses, for each timing during the period of the learning data, a set of measurement values from the sensors 110a to 110c as one sample of the learning data.

In this embodiment, the learning processing unit 250 generates, by learning, a model by unsupervised learning. As an example, the learning processing unit 250 may perform a processing to generate, by learning, the model by statistical learning using at least one measurement value included in the learning data. As an example of the statistical learning, the learning processing unit 250 may use the learning data to calculate probability distribution of a sample in a multidimensional space (a space whose dimension is the number of measurement values included in each sample), to give it to the model. Since abnormality is rarely generated in a plant or the like, and it is operating almost properly during the period of the learning data, it can be estimated that the farther a new set of measurement values is deviated from the probability distribution, the more likely it is to be abnormal. Using this probability distribution allows the model to calculate, when a new set of measurement values is inputted, how far the new set of measurement values is deviated from the probability distribution. As an example, such a model outputs, as a state value, a value that drops as it is deviated from the probability distribution.

The above-described model may output a state value obtained by normalizing a degree of deviation from probability distribution by a standard deviation of the probability distribution. As a result, the ranking unit 220 can give higher priority to a piece of equipment 100 presumed to be likely to be abnormal by comparing normalized state values and rearranging the plurality of pieces of equipment 100.

Instead of the above, the learning processing unit 250 may learn the model by supervised learning. In this case, each sample in the learning data is labeled as normal, abnormal, or the like. For example, the learning instruction input unit 245 may input, by the learning designation screen, designation of a normal period during which the target piece of equipment 100 was normal and an abnormal period during which the target piece of equipment 100 was abnormal, to add to each sample in the learning data a label corresponding to this designation.

The model may be, as an example, a neural network, SVM, or the like. The learning instruction input unit 245 updates a parameter of the model so as to reduce an error between an output by the model when each sample in the learning data is inputted into the model, and a label. For example, when a neural network is used, the learning instruction input unit 245 adjusts, by a method such as backpropagation, weight between each neuron of the neural network, bias of each neuron, and the like, by using an error between an output value outputted by the neural network in response to each sample being inputted, and a label.

For a certain piece of equipment 100 in the ranking screen 500, the monitoring apparatus 140 can use a measurement value of a period suitable for calculating the state value of each piece of equipment 100 to generate a model with higher accuracy, by inputting designation of a period of learning data to generate a model by learning in response to the learning button 550 being pressed. Moreover, when the state value outputted by the learned model is not appropriate, the monitoring apparatus 140 can change, in response to the learning button 550 being pressed, a range of measurement values used as learning data from among the measurement values stored in the recording unit 205, to update the model by re-learning. Moreover, the monitoring apparatus 140 can, by generating the candidate learning period, promote setting of a more preferred learning period by learning, to improve accuracy of the model after learning.

Various embodiments of the present invention may be described with reference to flowcharts and block diagrams, whose blocks may represent (1) steps of processes in which operations are executed or (2) units of apparatuses responsible for executing operations. Specific steps and units may be implemented by a dedicated circuit, a programmable circuit supplied with a computer-readable instruction stored on a computer-readable medium, and/or a processor supplied with a computer-readable instruction stored on a computer-readable medium. The dedicated circuit may include digital and/or analog hardware circuits and may include an integrated circuit (IC) and/or a discrete circuit. The programmable circuit may include a reconfigurable hardware circuit including, for example, a logical AND, a logical OR, a logical XOR, a logical NAND, a logical NOR, and another logical operation, a flip-flop, a register, a memory element such as a field-programmable gate array (FPGA), a programmable logic array (PLA), or the like.

The computer-readable medium may include any tangible device that can store an instruction for execution by a suitable device, so that the computer-readable medium having an instruction stored thereon is provided with an article of manufacture including an instruction which can be executed in order to create a means for executing an operation designated in the flowcharts or the block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a BLU-RAY (registered trademark) disk, a memory stick, an integrated circuit card, and the like.

The computer-readable instruction may include an assembler instruction, an instruction-set-architecture (ISA) instruction, a machine instruction, a machine dependent instruction, a microcode, a firmware instruction, state-setting data, or either a source code or an object code written in any combination of one or more programming languages, including an object-oriented programming language such as Smalltalk (registered trademark), JAVA (registered trademark), C++, or the like, and a conventional procedural programming language such as a "C" programming language or a similar programming language.

The computer-readable instruction may be provided to a programmable circuit or a processor of a programmable data processing apparatus such as a general-purpose computer, a special-purpose computer, or another computer, locally or via a local area network (LAN), a wide area network (WAN) such as the Internet or the like, and the computer-readable instruction may be executed in order to create the means for executing the operation designated in the flowcharts or the block diagrams. Examples of the processor include a computer processor, a processing unit, a microprocessor, a digital signal processor, a controller, a microcontroller, and the like.

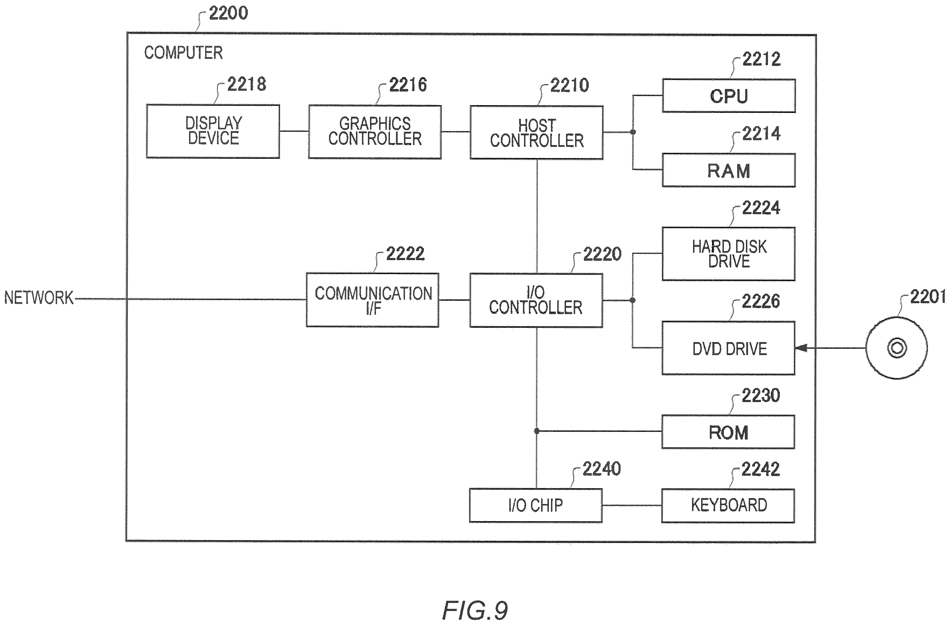

Fig. 9 shows an example of a computer 2200 in which a plurality of aspects of the present invention may be entirely or partially embodied. A program that is installed in the computer 2200 can cause the computer 2200 to function as or execute an operation correlated with an apparatus according to an embodiment of the present invention or one or more units of the apparatus, and/or can cause the computer 2200 to execute a process according to an embodiment of the present invention or steps of the process. Such a program may be executed by a CPU 2212 in order to cause the computer 2200 to execute a specific operation correlated with some or all of the blocks of the flowcharts and the block diagrams described herein.

The computer 2200 according to this embodiment includes the CPU 2212, a RAM 2214, a graphics controller 2216, and a display device 2218, which are interconnected by a host controller 2210. The computer 2200 also includes an input/output unit such as a communication interface 2222, a hard disk drive 2224, a DVD-ROM drive 2226, and an IC card drive, which are connected to the host controller 2210 via an input/output controller 2220. The computer also includes a legacy input/output unit such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 on a frame buffer or the like provided in the RAM 2214 or in itself, such that the image data is displayed on the display device 2218.

The communication interface 2222 communicates with another electronic device via a network. The hard disk drive 2224 stores a program and data used by the CPU 2212 in the computer 2200. The DVD-ROM drive 2226 reads the program or the data from a DVD-ROM 2201, and provides the program or the data to the hard disk drive 2224 via the RAM 2214. The IC card drive reads the program and the data from an IC card, and/or writes the program and the data into the IC card.

The ROM 2230 stores therein a boot program or the like executed by the computer 2200 at the time of activation, and/or a program depending on a hardware of the computer 2200. The input/output chip 2240 may also connect various input/output units to the input/output controller 2220 via a parallel port, a serial port, a keyboard port, a mouse port, or the like.

A program is provided by a computer-readable medium such as the DVD-ROM 2201 or the IC card. The program is read from the computer-readable medium, is installed in the hard disk drive 2224, the RAM 2214, or the ROM 2230, which is also an example of the computer-readable medium, and is executed by the CPU 2212. Information processing written in these programs is read into the computer 2200, resulting in cooperation between a program and the above-described various types of hardware resources. An apparatus or a method may be constituted by realizing handling or processing of information in accordance with usage of the computer 2200.

For example, when communication is executed between the computer 2200 and an external device, the CPU 2212 may execute a communication program loaded onto the RAM 2214, and instruct the communication interface 2222 to process the communication based on the processing written in the communication program. Under control of the CPU 2212, the communication interface 2222 reads transmission data stored in a transmission buffering region provided in a recording medium such as the RAM 2214, the hard disk drive 2224, the DVD-ROM 2201, or the IC card, and transmits the read transmission data to the network, or writes reception data received from the network to a reception buffering region or the like provided on the recording medium.

Moreover, the CPU 2212 may cause all or a necessary portion of a file or a database to be read into the RAM 2214, the file and the database having been stored in an external recording medium such as the hard disk drive 2224, the DVD-ROM drive 2226 (DVD-ROM 2201), the IC card, or the like, and execute various types of processing on the data on the RAM 2214. The CPU 2212 then writes back the processed data to the external recording medium.

Various types of information such as various types of programs, data, tables, and databases may be stored in the recording medium, and undergo information processing. The CPU 2212 may execute, on the data read from the RAM 2214, various types of processing including various types of operations, information processing, conditional judgement, conditional branch, unconditional branch, information search/replacement, and the like as described throughout the present disclosure and designated by an instruction sequence of programs, and writes back the result to the RAM 2214. Moreover, the CPU 2212 may search for information in the file, the database, or the like in the recording medium. For example, when a plurality of entries each having an attribute value of a first attribute correlated with an attribute value of a second attribute, are stored in the recording medium, the CPU 2212 may search for an entry matching a condition whose attribute value of the first attribute is designated, from among the plurality of entries, and read the attribute value of the second attribute stored in the entry, thereby acquiring the attribute value of the second attribute correlated with the first attribute that satisfies a predetermined condition.

The program or the software module described above may be stored on the computer 2200 or in a computer-readable medium near the computer 2200. Moreover, a recording medium such as a hard disk or a RAM provided in a server system connected to a dedicated communication network or the Internet can be used as the computer-readable medium, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: monitoring system, 100a to 100c: piece of equipment, 110a to 110i: sensor, 120a to 120b: gateway apparatus, 130: network, 140: monitoring apparatus, 150: terminal, 200: measurement value acquisition unit, 205: recording unit, 207: association acquisition unit, 209: association storage unit, 210: calculation unit, 215: selection unit, 220: ranking unit, 225: display processing unit, 230: selection condition input unit, 243: learning period selection unit, 245: learning instruction input unit, 250: learning processing unit, 500: ranking screen, 510: chart, 515: setting button, 520: graph display button, 550: learning button, 2200: computer, 2201: DVD-ROM, 2210: host controller, 2212: CPU, 2214: RAM, 2216: graphics controller, 2218: display device, 2220: input/output controller, 2222: communication interface, 2224: hard disk drive, 2226: DVD-ROM drive, 2230: ROM, 2240: input/output chip, 2242: keyboard

## Claims

1. A monitoring apparatus comprising:
an association acquisition unit configured to acquire, for each of a plurality of pieces of equipment, an association with at least one sensor monitoring a state of the each of the plurality of pieces of equipment;
a calculation unit configured to calculate, based on at least one measurement value from the at least one sensor associated with each piece of equipment of the plurality of pieces of equipment, a state value of each piece of equipment;
a ranking unit configured to rank the plurality of pieces of equipment according to a change width or a change rate in the state value; and
a display processing unit configured to perform a processing to display an information screen corresponding to the ranking of the plurality of pieces of equipment.

2. The monitoring apparatus according to claim 1, further comprising an association storage unit configured to store, for each of the plurality of pieces of equipment, the association with the at least one sensor monitoring the state of the each of the plurality of pieces of equipment.

3. The monitoring apparatus according to claim 1 or 2, further comprising a learning processing unit configured to perform a processing to generate, by learning, a model calculating, from the at least one measurement value of the at least one sensor associated with each piece of equipment, the state value of the each piece of equipment, wherein
the calculation unit is configured to calculate, for each piece of equipment, the state value from the at least one measurement value by using the model.

4. The monitoring apparatus according to claim 3, wherein the learning processing unit is configured to perform, for at least one piece of equipment, the processing to generate the model by learning through statistical learning using the at least one measurement value.

5. The monitoring apparatus according to claim 3 or 4, wherein
the display processing unit is configured to perform, in association with each piece of equipment of the plurality of ranked pieces of equipment, a processing to display a learning button for instructing to generate the model, and
the learning processing unit is configured to perform, in response to the learning button being pressed, the processing to generate the model by learning.

6. The monitoring apparatus according to any one of claims 3 to 5, further comprising a learning period selection unit configured to select, for the at least one piece of equipment of the plurality of pieces of equipment, a period of a predetermined length or longer during which a variation range of the at least one measurement value from the at least one sensor is equal to or less than a threshold, as a candidate learning period used to learn the model.

7. The monitoring apparatus according to any one of claims 1 to 6, wherein the display processing unit is configured to perform a processing to display a chart indicating rank order transitions of the plurality of pieces of equipment.

8. The monitoring apparatus according to claim 7, wherein the display processing unit is configured to perform a processing to highlight, in the chart, a rank order shift of a piece of equipment whose state value exhibits a change width or a change rate equal to or greater than a threshold, among the plurality of pieces of equipment.

9. The monitoring apparatus according to any one of claims 1 to 8, further comprising a selection unit configured to select at least one piece of equipment whose state value has changed by an amount equal to or greater than a predetermined change width or change rate during a predetermined time length period, among the plurality of pieces of equipment, wherein
the display processing unit is configured to perform the processing to display the information screen for the at least one piece of equipment that has been selected.

10. The monitoring apparatus according to claim 9, further comprising a selection condition input unit configured to input designation of at least one of the predetermined time length or the predetermined change width or change rate.

11. The monitoring apparatus according to any one of claims 1 to 10, wherein
the display processing unit is configured to:
perform, in association with each piece of equipment displayed on the information screen, a processing to display a graph display button for instructing display of a trend graph indicating a change in the at least one measurement value from the at least one sensor associated with the each piece of equipment displayed on the information screen; and
perform, in response to the graph display button being pressed, a processing to display the trend graph.

12. A monitoring method comprising:
acquiring, by a monitoring apparatus, for each of a plurality of pieces of equipment, an association with at least one sensor monitoring a state of the each of the plurality of pieces of equipment;
calculating, by the monitoring apparatus, based on at least one measurement value from the at least one sensor associated with each piece of equipment of the plurality of pieces of equipment, a state value of each piece of equipment;
ranking, by the monitoring apparatus, the plurality of pieces of equipment according to a change width or a change rate in the state value; and
performing, by the monitoring apparatus, a processing to display an information screen corresponding to the ranking of the plurality of pieces of equipment.

13. A monitoring program that, when executed by a computer, causes the computer to function as a monitoring apparatus comprising:
an association acquisition unit configured to acquire, for each of a plurality of pieces of equipment, an association with at least one sensor monitoring a state of the each of the plurality of pieces of equipment;
a calculation unit configured to calculate, based on at least one measurement value from the at least one sensor associated with each piece of equipment of the plurality of pieces of equipment, a state value of each piece of equipment;
a ranking unit configured to rank the plurality of pieces of equipment according to a change width or a change rate in the state value; and
a display processing unit configured to perform a processing to display an information screen corresponding to the ranking of the plurality of pieces of equipment.
